# EUROPEAN PATENT APPLICATION

(11) **EP 1 755 181 A1**
(43) Date of publication of application: **21.02.2007**
(21) Application number: 05743729.5
(22) Date of filing: 30.05.2005
(51) Int. Cl.: H01M 4/32, H01M 4/52, H01M 10/30

(54) **ALKALLINE STORAGE BATTERY**

(30) Priority: 02.06.2004 JP 2004164918
(71) Applicant: TOYOTA JIDOSHA KABUSHIKI KAISHA, Toyota-shi, Aichi-ken 471-8571 (JP)
(72) Inventor: KOBAYASHI, T.; c/o K. K. TOYOTA CHUO KENKYUSHO, Aichi-gun, Aichi 4801192 (JP); KONDO, Y.; c/o K. K. TOYOTA CHUO KENKYUSHO, Aichi-gun, Aichi 4801192 (JP); MATSUO, H.; c/o K. K. TOYOTA CHUO KENKYUSHO, Aichi-gun, Aichi 4801192 (JP); SASAKI, T.; c/o K. K. TOYOTA CHUO KENKYUSHO, Aichi-gun, Aichi 4801192 (JP); ITOU, Y.; c/o K. K. TOYOTA CHUO KENKYUSHO, Aichi-gun, Aichi 4801192 (JP); NOZAKI, H.; c/o K. K. TOYOTA CHUO KENKYUSHO, Aichi-gun, Aichi 4801192 (JP); NONAKA, T.; c/o K. K. TOYOTA CHUO KENKYUSHO, Aichi-gun, Aichi 4801192 (JP); SENO, Y.; c/o K. K. TOYOTA CHUO KENKYUSHO, Aichi-gun, Aichi 4801192 (JP); UKYO, Y.; c/o K. K. TOYOTA CHUO KENYUSHO, Aichi-gun, Aichi 4801192 (JP); ITO, Masanori; c/o TOYOTA JIDOSHA K. K., Aichi 4718572 (JP)
(74) Representative: Kuhnen & Wacker
(86) International application number: PCT/JP2005/009897
(87) International publication number: WO 2005/119818

(57) **Abstract**

An alkaline storage battery 1 has: a cathode 2 containing β-type nickel hydroxide and/or β-type nickel oxyhydroxide as a cathode active material; an anode 3 containing an anode active material; and an alkaline aqueous solution as an electrolytic solution 4. The alkaline storage battery 1 is configured to restrain at least part of a crystal structure of the cathode active material from changing due to charging or discharging and to restrain the cathode active material from exhibiting a new diffraction peak at a position that ranges from 8.4 degrees to 10.4 degrees in X-ray diffraction angle 2θ by X-ray diffraction using CuKα-rays. It is preferable that an anion-exchange membrane layer 25 should be provided on a surface of the cathode 2.

## Description

### Technical Field

The present invention relates to an alkaline storage battery having a cathode containing β-type nickel hydroxide and/or β-type nickel oxyhydroxide as a cathode active material; an anode containing an anode active material; and an alkaline aqueous solution as an electrolytic solution.

### Background of the Invention

An alkaline storage battery such as a nickel hydride battery or a Ni-Cd battery using β-type nickel hydroxide as a cathode active material is widely utilized in the field of household electrical equipment, communication equipment, AV-associated equipment, and OA-associated equipment or the like. In addition, such an alkaline storage battery is also expected as a power supply source of a hybrid vehicle for which a demand has increased in recent years.

In the alkaline storage battery, a cathode active material changes in its valence at the time of charging and at the time of discharging. That is, when charging is carried out, the cathode active material exists as β-type nickel oxyhydroxide (βNiOOH), in which valence of Ni is 3. When discharging is carried out, the cathode active material exists as β-type nickel hydroxide (βNi(OH)₂), in which valence of Ni is 2. Thus, in the alkaline storage battery, the cathode active material changes from β-type nickel hydroxide to β-type nickel oxyhydroxide or from β-type nickel oxyhydroxide to β-type nickel hydroxide, whereby charging and discharging can be carried out.

In such an alkaline storage battery, if shallow discharge in depth is repeated, there may occur a phenomenon that a discharge voltage is lowered at the boundary of a state of charge (SOC) at a lower limit point of the repeated discharge, i.e., a so called memory effect. Up to now, refresh discharging or complete discharging has been known as a technique of eliminating, preventing, or restraining this memory effect.

In addition, recently, there has been developed a technique of determining a timing of forcible discharging or refresh discharging for eliminating the memory effect from a battery state such as a voltage or a temperature and from charging and discharging history (reference should be made to patent documents 1 to 5).
In addition, there has been developed a technique of calculating and displaying a time required for a refresh charging or discharging for eliminating the memory effect (patent document 6).
Further, there has been developed a technique of completely discharging part of a battery mounted in a system, thereby eliminating the memory effect (patent documents 7 and 8).

However, in the case where an alkaline storage battery is used for a hybrid vehicle or the like, for example, it has been difficult to carry out forcibly discharging or refresh discharging in the alkaline storage battery. That is, in the hybrid vehicle or the like, if the alkaline storage battery is excessively discharged, there occurs a problem with higher fuel cost, and there has been a danger that an advantage of the hybrid vehicle cannot be utilized. Therefore, in use of the hybrid vehicle or the like, it has been difficult to eliminate, prevent, or restrain the memory effect by means of forcible discharging, refresh discharging, or complete discharging.

Patent document 1: JP 2001-333543 Unexamined Patent Publication (Kokai)
Patent document 2: JP 2001-95167 Unexamined Patent Publication (Kokai)
Patent document 3: JP 2001-8375 Unexamined Patent Publication (Kokai)
Patent document 4: JP H11-313447 Unexamined Patent Publication (Kokai)
Patent document 5: JP H11-136871 Unexamined Patent Publication (Kokai)
Patent document 6: JP 2002-17049 Unexamined Patent Publication (Kokai)
Patent document 7: JP 2000-350382 Unexamined Patent Publication (Kokai)
Patent document 8: JP H10-290532 Unexamined Patent Publication (Kokai)

### Disclosure of Invention

### Problems to be solved by the invention

The present invention has been accomplished in view of the conventional problems, and its object is to provide an alkaline storage battery capable of restraining or preventing a memory effect.

### Means of Solving the Problems

The present invention is to provide an alkaline storage battery having a cathode containing β-type nickel hydroxide and/or β-type nickel oxyhydroxide as a cathode active material; an anode containing an anode active material; and an alkaline aqueous solution as an electrolytic solution,
wherein the alkaline storage battery is configured to restrain at least part of a crystal structure of the cathode active material from changing due to charging or discharging and to restrain the cathode active material from exhibiting a new diffraction peak at a position that ranges from 8.4 degrees to 10.4 degrees in diffraction angle 2θ by X-ray diffraction using CuKα-rays.

The most remarkable point in the present invention is that it is configured to restrain the above cathode active material from exhibiting a new diffraction peak at a position that ranges from 8.4 degrees to 10.4 degrees in diffraction angle 2θ by X-ray diffraction using CuKα-rays.
Thus, in the alkaline storage battery according to the present invention, unlike a conventional technique, even if forcible discharging, refresh discharging, or complete discharging is not carried out, an occurrence of a memory effect can be prevented or restrained. Therefore, the above alkaline storage battery can be preferably used as a power supply source of a hybrid vehicle or the like, for example.

Hereinafter, operation effect of the present invention will be described in detail.
In the above alkaline storage battery, the above cathode active material can be alternatively exchanged between a state of β-type nickel hydroxide (βNi(OH)₂) and a state of β-type nickel oxyhydroxide (βNiOOH) by means of charging or discharging. That is, when the above alkaline storage battery is charged, β-type nickel hydroxide in the above cathode active material changes to β-type nickel oxyhydroxide. On the other hand, when the above alkaline storage battery is discharged, β-type nickel oxyhydroxide in the above cathode active material changes to β-type nickel hydroxide. Thus, in the above cathode active material, the state of β-type nickel hydroxide and the state of β-type nickel oxyhydroxide are alternately exchanged with each other, whereby the valence of Ni changes, and battery charging or discharging can be carried out.

As described above, the diffraction peak at the position of 8.4 degrees to 10.4 degrees in diffraction angle 2θ by the X-ray diffraction peak using CuKα-rays is provided as a peak that derives from novel nickel oxyhydroxide contained in the above cathode active material (hereinafter, this nickel oxyhydroxide is referred to as "β' NiOOH" or "β'-type nickel oxyhydroxide"). This material is different from γ-type nickel oxyhydroxide (γNiOOH) that exhibits a diffraction peak in the vicinity of 12 degrees to 13 degrees in 2θ by X-ray diffraction using CuKα-rays or β-type nickel oxyhydroxide (βNiOOH) that exhibits a diffraction peak in the vicinity of 18 degrees to 19 degrees in 2θ. When charging or discharging of the above alkaline storage battery is repeatedly carried out, the above β'-type nickel oxyhydroxide may occur. In addition, this β'-type nickel oxyhydroxide can cause a so-called memory effect that a discharge voltage is lowered.
In the present invention, as described above, a new diffraction peak is restrained from being exhibited at a position that ranges from 8.4 degrees to 10.4 degrees in diffraction angle 2θ by X-ray diffraction. That is, an occurrence of the above β'-type nickel oxyhydroxide is restrained. Thus, in the above alkaline storage battery, the memory effect can be restrained or prevented.

### Brief Description of the Drawings

FIG. 1 is an illustrative view illustrating a configuration of an alkaline storage battery according to Example.
FIG. 2 is a schematic view showing a charging and discharging cycle of a charging and discharging cycle test according to Example.
FIG. 3 is a diagram depicting a discharge curve of an alkaline storage battery (battery E) in a charging and discharging cycle according to Example.
FIG. 4 is a diagram depicting a transition of a discharge end voltage of alkaline storage batteries (battery E and battery C) in a charging and discharging cycle according to Example.
FIG. 5 is a diagram depicting a discharge curve of alkaline storage batteries (battery E and battery C) when discharging has been carried out from a state of full charging after 50 cycles up to a battery voltage 1V according to Example.
FIG. 6 is an illustrative view illustrating a configuration of a comparative alkaline storage battery (battery C) according to Example.
FIG. 7 is a diagram depicting a discharge curve of a comparative alkaline storage battery (battery C) in a charging and discharging cycle according to Example.
FIG. 8 is a diagram depicting a result of X-ray diffraction using CuKα-rays of a cathode at the time of full charging in alkaline storage batteries (battery E and battery C) according to Example.

### Best Mode for Carrying Out the Invention

In an alkaline storage battery according to the present invention, in X-ray diffraction using CuKα-rays, a new diffraction peak at 8.4 degrees to 10.4 degrees in diffraction angle 2θ is restrained from being exhibited. That is, an occurrence of the above β'-type nickel oxyhydroxide is restrained. A diffraction peak at 8.4 degrees to 10.4 degrees in diffraction angle 2θ corresponds to a d-value of 10.5 nm to 8.5 nm in the above cathode active material. A d-value denotes a distance between crystal faces which are arranged periodically in a crystal structure and which diffract X-rays.

In addition, it is preferable that the above cathode should have an anion-exchange membrane layer on a surface of the cathode.
In this case, the above anion-exchange membrane layer can function as a crystal structure change restraining portion for restraining the occurrence of the above β'-type nickel oxyhydroxide and for restraining a change of a crystal structure of the above cathode active material. Therefore, in this case, there can be easily provided a configuration such that the above cathode active material is restrained from exhibiting a new diffraction peak at the above specific position in diffraction angle 2θ by X-ray diffraction, i.e., a configuration such that the occurrence of the above β'-type nickel oxyhydroxide is restrained.
The above β'-type nickel oxyhydroxide occurs due to a phenomenon that cations such as alkaline metal ions, alkaline earth metal ions, quaternary ammonium ions are inserted into a crystal lattice of β-type nickel oxyhydroxide, for example, and that these ions are regularly arranged in the crystal lattice. As described above, by forming an anion-exchange membrane on a surface of the above cathode, the insertion of the cations as described above can be prevented the occurrence of β'-type nickel oxyhydroxide can be prevent.

In addition, it is preferable that at least part of Ni contained in the above cathode active material should be solidly soluble and substituted by one or more kinds of elements selected from among transition metals, Mg, Zn, Cd, Al, Y, Yb, and Er.
In this case, an oxygen generation over voltage of the above cathode active material can be risen. In addition, nickel hydroxide contained in the above cathode active material can be restrained from changing to γ-type. That is, in this case, charging or discharging efficiency of the above cathode active material can be improved.

In addition, the above alkaline storage battery can be configured as the major constituent elements by a cathode and an anode, a separator sandwiched therebetween, and an alkaline aqueous solution as an electrolytic solution or the like.
In the above alkaline storage battery, the cathode can be formed by, for example, coating a current collector such as a foamed nickel plate with a cathode compound pasted by mixing an electrical conduction promoter and a binder and the like with the above cathode active material and adding a proper amount of water, and then, compressing the coated current collector in order to improve electrode density as required.

As the above electrical conduction promoter, there are compounds containing Co such as CoO, Co, CoOOH, Co(OH)₂, Co₂O₃, and Co₃O₄, for example, carbon and nickel or the like.
The binder serves to bond active material particles and electrical conduction promoter particles with each other. For example, there can be used one or more kinds selected from among: a fluorine resin such as polytetrafluoroethylene, polyvinylidene fluoride, or fluorine rubber, methyl cellulose, polyvinyl alcohol, sodium polyacrylate, and potassium polyacrytlate or the like.

The anode can be formed by, for example, coating a current collector such as a formed nickel plate with an anode compound pasted by mixing a binder with an anode active material and mixing a proper amount of water, and then, pressing the coated current collector as required. A binder similar to the above cathode can be used.
In addition, in the case where a metal such as zinc is used as the above anode active material, the metal molded in the shape of sheet can be used as an anode. In addition, a metal molded in the shape of sheet can be used as that applied in pressure bonding with a current collector.

In addition, it is preferable that the above anode should contain one or more kinds selected from a hydrogen storage alloy, cadmium hydroxide, and hydrogen as the above anode active material.
In this case, the above alkaline storage battery can be optimally configured as a secondary battery. In addition, the secondary battery can achieve a high battery voltage and a battery capacity.

In addition, the separator sandwiched between the cathode and the anode is the one for separating the cathode and anode from each other and holding electrolytic solution, and for example, a hydrophilic separator can be used. To be more precise, such as a polyethylene nonwoven fabric, a polypropylene nonwoven fabric, a polyamide nonwoven fabric, and a nylon nonwoven fabric or the like which are respectively conducted hydrophilic processing can be used.

As alkaline water solution, for example, water solution containing one or more kinds of salt selected from potassium hydroxide, lithium hydroxide, sodium hydroxide, rubidium hydroxide, caesium hydroxide, calcium hydroxide, strontium hydroxide, barium hydroxide, magnesium hydroxide and quaternary ammonium hydroxide or the like can be used.

The concentration of alkaline water solution as electrolytic solution is preferably 1 to 10 M. In the case of less than 1M, the electrical conductivity gets lower, and there is a danger that enough battery capacity can not be obtained. On the other hand, in the case of more than 10M, there is a danger that the electrolytic solution easily absorbs carbon dioxide in the atmosphere and carbonate occurs. As a result, the electrical conductivity gets lower in this case as well, and there is a danger that enough battery capacity can not be obtained. More preferably, the concentration of alkaline water solution as a electrolytic solution should be 4 to 8M.

In addition, as a shape of the alkaline battery, there are a coin shape, a cylindrical shape, and a rectangular shape or the like. As a battery case housing the cathode, the anode, the separator and the electrolytic solution serving as an water solution or the like, the one having the shape which corresponds to these shape can be used.

### EMBODIMENTS

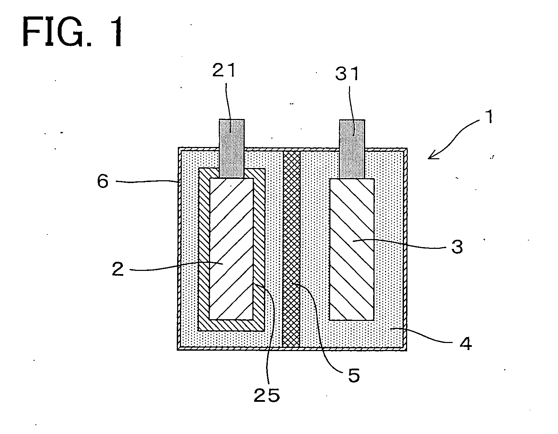

Now, Example of the present invention will be described with reference to FIG. 1 to FIG. 8.
As shown in FIG. 1, an alkaline storage battery 1 according to this Example has: a cathode 2 that contains β-type nickel hydroxide and/or β-type nickel oxyhydroxide as a cathode active material; an anode 3 that contains an anode active material; and an alkaline aqueous solution as an electrolytic solution 4. The alkaline storage battery 1 is configured to restrain at least part of a crystal structure of a cathode active material from changing due to charging or discharging and to restrain the cathode active material from exhibiting a new diffraction peak at a position of 8.4 degrees to 10.4 degrees in diffraction angle 2θ by X-ray diffraction using CuKα-rays. Specifically, the cathode 2 has an anion-exchange membrane layer 25 on its surface.

As shown in the figure, in the alkaline storage battery 1, the cathode 2 and the anode 3 are formed so that their cathode active material and anode active material are bound with current collectors 21 and 31, respectively. In addition, between the cathode 2 and the anode 3, a separator 5 for separating them is disposed. The cathode 2, the anode 3 and the separator 5 are disposed in a battery case 6, and an electrolytic solution 4 is poured in the battery case 6.

Now, a method for manufacturing the alkaline storage battery 1 according to this Example will be described here.
First, a cathode compound in a paste state was fabricated by mixing a fluorine resin, methyl cellulose, CoO, and water with nickel hydroxide powder. This cathode compound was coated on a foamed nickel plate as a current collector 21, the coated plate was dried, and the dried plate was defined as a cathode 2. Next, a surface of this cathode 2 was covered with an OH-type anion-exchange membrane layer.
In addition, a hydrogen storage alloy was coated on a foamed nickel plate as a current collector 31, the coated plate was dried, and the dried plate was defined as an anode 3.

Next, the cathode 2 and the anode 3 were inserted into a battery case 6, and a hydrophilic separator 5 was disposed between the cathode 2 and the anode 3. A KOH aqueous solution of 5M in concentration serving as an electrolytic solution 4 was poured into the battery case 6, the battery case 6 was sealed, and an alkaline storage battery 1 was obtained. This battery was defined as battery E.
In battery E, the cathode 2 is formed in a planar shape of 1.5 cm x 1.5 cm x thickness of 1 mm, and contains 0.9 g of nickel hydroxide as a cathode active material.

Next, a charging and discharging cycle test was carried out with respect to the above battery E, and characteristics of the battery E were evaluated.

### (Charging and discharging cycle test)

Specifically, first, in battery E, preliminary charging or discharging was carried out in order to define a current value that corresponds to 0.2 C. That is, first, a state of full charge was established by charging battery E at a temperature of 20 °C and at a current of 25 mA for 12 hours.
Next, discharging was carried out until a battery voltage had reached 1V at a temperature of 20 °C and at a current of 25 mA. At this time, an actually obtained battery capacity was defined as a battery capacity, and a current value of 0.2 C was defined while this battery capacity was defined as a standard.

Next, a state of full charge was established by charging battery E at 0.2 C for 6 hours. Next, discharging for 2 hours 15 minutes at 0.2 C and charging for 3 hours 15 minutes at 0.2 C were defined as one cycle, and battery E was used so as to repeat this discharging or charging by 50 cycles. Here, discharging for 2 hours 15 minutes at 0.2 C corresponds to SOC 55%. Charging for 3 hours 15 minutes at 0.2 C corresponds to a state of full charge (SOC 100%), and one-hour overcharging was carried out in consideration of charging inefficiency.

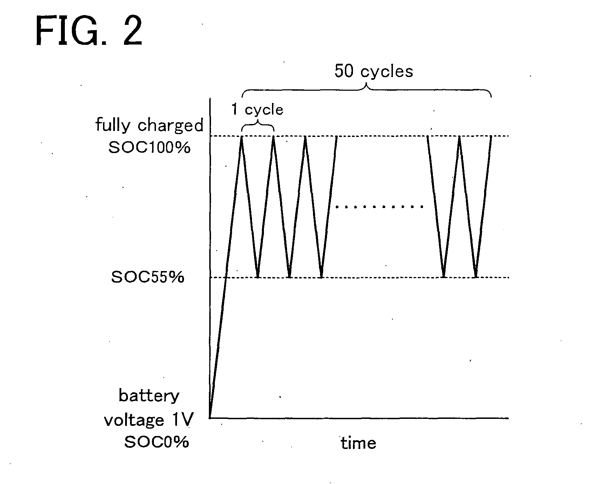

FIG. 2 is a schematic view showing this charging and discharging cycle. In FIG. 2, the horizontal axis indicates a time, and the vertical axis indicates a state of charge (SOC).

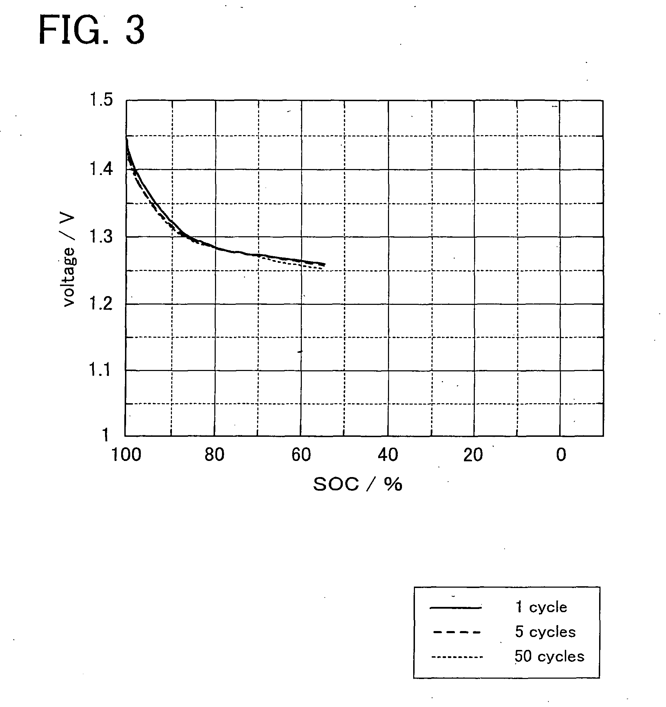

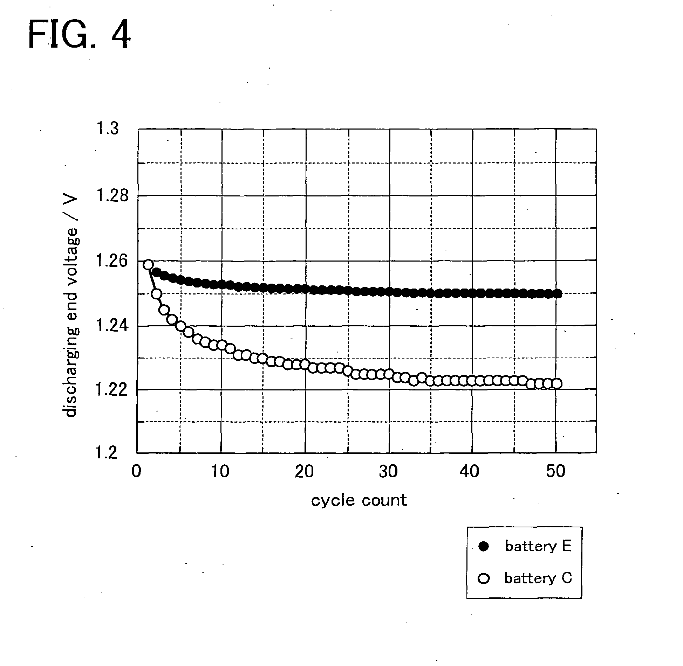

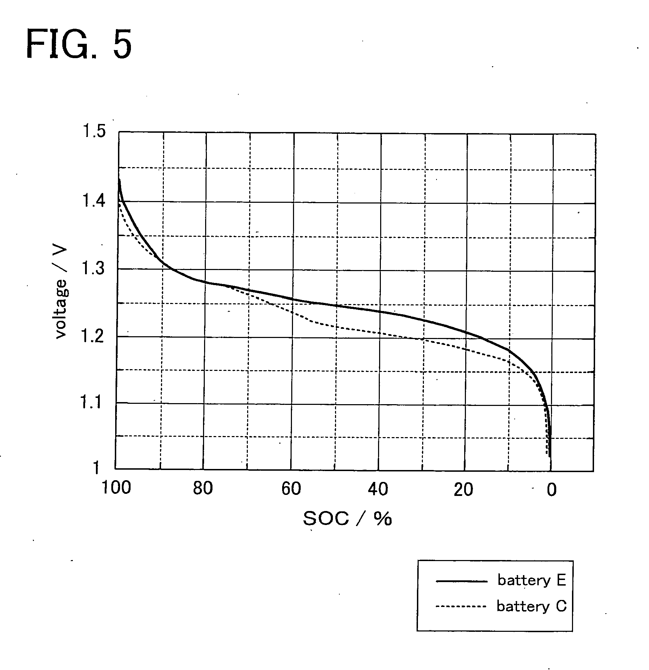

In this charging and discharging cycle, there was investigated: a change of a discharge curve of battery E while in charging or discharging of 50 cycles and a transition of a discharging end voltage. Results of this investigation are shown in FIG. 3 and FIG. 4. In FIG. 3, the horizontal axis indicates SOC (%), and the vertical axis indicates a voltage (V). In addition, in FIG. 4, the horizontal axis indicates cycle count, and the vertical axis indicates a discharging end voltage (V).
In addition, after 50-cycle charging or discharging, a ratio (K/Ni) of K quantity (atom number) to Ni quantity (atom number) contained in a cathode active material was measured. A result of the measurement is shown in Table 1. Further, there was investigated a shape of a discharge curve when discharging was carried out from a state of full charge after 50 cycles to a battery voltage of 1V. A result of the investigation is shown in FIG. 5.

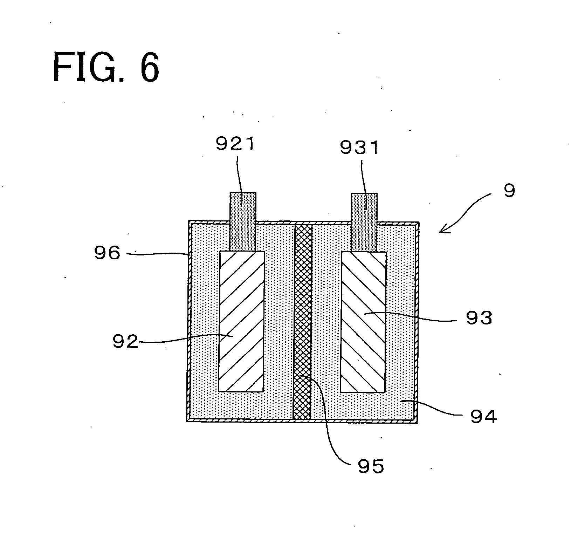

In addition, in this Example, a comparative alkaline storage battery (battery C) was fabricated in order to clarify an excellent effect of battery E.
As shown in FIG. 6, as is the above battery E, a comparative alkaline storage battery 9 has a cathode 92 that contains β-type nickel hydroxide and/or β-type nickel oxyhydroxide as a cathode active material; an anode 93 that contains an anode active material; and an alkaline aqueous solution as an electrolytic solution 94.
In this comparative alkaline storage battery 9, the cathode 92 and the anode 93 are formed by binding their cathode active material and anode active material with current collectors 921 and 931, respectively. Between the cathode 92 and the anode 93, a separator 95 for separating them is disposed. The cathode 92, the anode 93, and the separator 95 are disposed in a battery case 96, and an electrolytic solution 94 is poured into the battery case 96.

At the time of manufacture of a comparative alkaline battery (battery C), as in the above battery E, first, a cathode compound in a paste state was fabricated, and this cathode compound was coated on a foamed nickel plate serving as a current collector 921. Then, the coated plate was dried, and this dried plate was defined as a cathode 92. In addition, a hydrogen storage alloy was coated on a foamed nickel plate serving as a current collector 931, the coated plate was dried, and the dried plate was defined as an anode 93.

Next, as is the above battery E, the cathode 92, the anode 93, and a hydrophilic separator 95 were inserted into a battery case 96. A KOH aqueous solution of 5M in concentration serving as an electrolytic solution 94 was poured into the battery case 96, the battery case 96 was sealed, and an alkaline storage battery 9 was obtained. This battery was defined as battery C. This battery C is similar to the above battery E except that it does not have an anion-exchange membrane layer formed on a surface of the cathode of the above battery E.

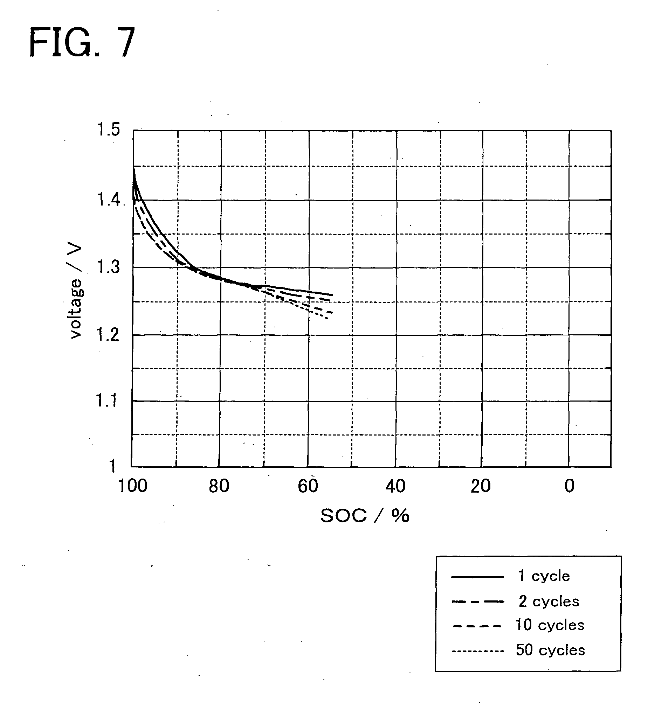

Next, with respect to this battery C, as is the above battery E, there were investigated a change of a discharge curve in 50 cycles and a transition of a discharging end voltage. Results of the investigation were shown in FIG. 7 and FIG. 4, respectively, together with the results of the above battery E. In addition, a K quantity (K/Ni) relevant to Ni quantity contained in a cathode active material after 50-cycle charging or discharging was measured. A result of the measurement is shown in Table 1 together with the result of the above battery E. Further, there was investigated a shape of a discharge curve when discharging was carried out from a state of full charge after 50 cycles to a battery voltage 1V. A result of the investigation is shown in FIG. 5 together with the result of the above battery E.

### [Table 1]

**(Table 1)**

| kinds of battery | K/Ni |
|---|---|
| battery E | 0. 02 |
| battery C | 0.06 |

As is known in comparison between FIG. 3 and FIG. 7, it is found that battery E highly maintains a discharge voltage during a charging and discharging cycle as compared with battery C. In addition, as is known from FIG. 4, battery E was high in discharge end voltage in each cycle as compared with battery C. Further, as is known from FIG. 5, in battery C, a discharge voltage was significantly lowered after the state of charge (SOC) was lower than about 75% as compared with battery E in discharge voltage obtained.

In this way, in battery C, a memory effect occurs, and a discharge voltage is lowered. In contrast, in battery E, a memory effect is restrained. That is, in battery E, even after repeating discharge whose depth is shallow, it is found that an excellent discharge voltage can be achieved in a state in which a state of charge (SOC) is low.

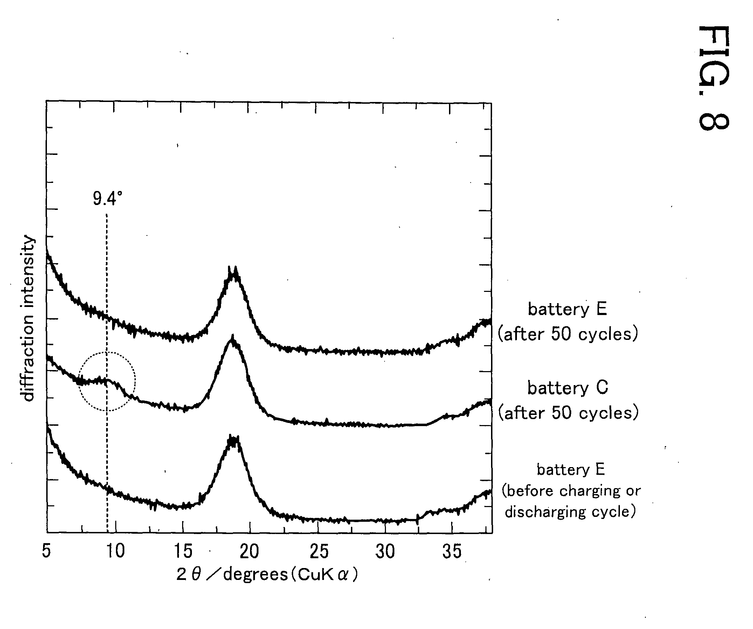

Next, in order to study a cause of an occurrence of a memory effect, X-ray diffraction measurement was carried out with respect to the cathodes of the above battery E and battery C which are fully charged before and after a charging and discharging cycle test. A result of the measurement is shown in FIG. 8. In FIG. 8, the horizontal axis indicates a diffraction angle 2θ (degrees), and the vertical axis indicates diffraction intensity. The results of X-ray diffraction before the above charging and discharging cycle test were substantially similar to each other in battery E and battery C. Thus, FIG. 8 shows only the result of battery E.

As is known from FIG. 8, in the result of X-ray diffraction on the cathode of battery C, it is found that a new diffraction peak appears at a position of 8.4 degrees to 10.4 degrees in diffraction angle 2θ as compared with a state prior to the charging and discharging cycle test. In the figure, this new peak is shown by enclosing it by dotted line. In contrast, in battery E, such a peak did not appear at a position similar to that of the diffraction angle 2θ.

In addition, as is known from Table 1, in battery E, a K quantity (K/Ni) relevant to Ni contained in the cathode active material in a state of full charge is as well as 0.02. In contrast, in battery C, this quantity is as much as 0.06.

From the above results, it is thought that the memory effect occurs due to an occurrence of a change such that a new diffraction peak occurs at a position of 8.4 degrees to 10.4 degrees in diffraction angle 2θ in the crystal structure of the above cathode active material. In addition, it is thought that such a change in crystal structure occurs due to potassium or the like entering the crystal structure of the cathode active material.

As shown in FIG. 1, battery E according to this Example has an anion-exchange membrane layer 25 on a surface of a cathode 2. Thus, potassium ions contained in an electrolytic solution 4 can be restrained from being inserted into a crystal lattice of a cathode active material of the cathode 2. As a result, the occurrence of the above β'-type nickel oxyhydroxide can be restrained or prevented and the occurrence of a memory effect can be restrained or prevented.

## Claims

1. An alkaline storage battery **characterized by** comprising:
a cathode containing β-type nickel hydroxide and/or β-type nickel oxyhydroxide as a cathode active material;
an anode containing an anode active material; and
an alkaline aqueous solution as an electrolytic solution,
wherein the alkaline storage battery is configured to restrain at least part of a crystal structure of the cathode active material from changing due to charging or discharging and to restrain the cathode active material from exhibiting a new diffraction peak at a position that ranges from 8.4 degrees to 10.4 degrees in diffraction angle 2θ by X-ray diffraction using CuKα-rays.

2. An alkaline storage battery as claimed in claim 1, **characterized in that** the cathode has an anion-exchange membrane layer on a surface of the cathode.

3. An alkaline storage battery as claimed in claim 1 or claim 2, **characterized in that** at least part of Ni contained in the cathode active material is solidly soluble and substituted by one or more kinds of elements selected from among transition metals, Mg, Zn, Cd, Al, Y, Yb and Er.

4. An alkaline storage battery as claimed in any one of claims 1 to 3, **characterized in that** the anode contains one or more kinds selected from a hydrogen storage alloy, cadmium hydroxide, and hydrogen as the anode active material.
